**Europäisches Patentamt**

**European Patent Office**

**Office européen des brevets**

(19)

(11) Veröffentlichungsnummer: **0 098 460**
**B1**

(12) # EUROPÄISCHE PATENTSCHRIFT

(45) Veröffentlichungstag der Patentschrift:
**19.11.87**

(51) Int. Cl.⁴: **G 05 B 11/26**

(21) Anmeldenummer: **83106087.6**

(22) Anmeldetag: **22.06.83**

(54) Regelvorrichtung für ein elektrisches Stellglied.

(30) Priorität: **06.07.82 DE 3225157**

(43) Veröffentlichungstag der Anmeldung:
**18.01.84 Patentblatt 84/3**

(45) Bekanntmachung des Hinweises auf die Patenterteilung:
**19.11.87 Patentblatt 87/47**

(84) Benannte Vertragsstaaten:
**CH DE FR GB IT LI SE**

(56) Entgegenhaltungen:
**GB - A - 2 015 841**
**GB - A - 2 072 446**
**US - A - 4 123 729**
**US - A - 4 336 507**

(73) Patentinhaber: **ROBERT BOSCH GMBH, Postfach 50,
D-7000 Stuttgart 1 (DE)**

(72) Erfinder: **Nitschke, Werner, Roseggerweg 14,
D-7257 Ditzingen (DE)**

## Beschreibung

Die Erfindung geht aus von einer Regelvorrichtung nach dem Oberbegriff des Patentanspruchs 1.

Aus der GB-A-2 015 841 ist eine Ansteuerschaltung für ein induktives Stellglied bekannt, in dem ein Stössel mittels eines Elektromagneten bewegbar ist. Die Ansteuerschaltung umfasst einen Komparator, dem ein analoges Steuersignal zugeführt wird, das den Arbeitszustand eines vom Stössel betätigten Elements repräsentiert. Die Ansteuerschaltung umfasst weiter eine Verstärkerschaltung mit einem Ausgangsverstärker in Form eines Ausgangstransistors, der den Ansteuerstrom für das induktive Stellglied entsprechend dem Ausgangssignal des Komparators liefert. Die Ansteuerschaltung umfasst weiter einen Widerstand im positiven Rückkopplungszweig, der an den Ausgangsanschluss des Komparators und an einen seiner Eingangsanschlüsse geschaltet ist, an dem das analoge Kontrollsignal anliegt, sowie einen Widerstand im negativen Rückkopplungszweig, der an den Ausgang der Ausgangsverstärkerschaltung und einen weiteren Eingang des Komparators geschaltet ist und auf diese Weise den Ein- bzw. Auszustand des Ausgangs beeinflusst.

Ähnliche Regelvorrichtungen sind auch aus der US-PS 3 763 645, der DE-A1-3 140 301, sowie der DE-A1-3 200 475 bekannt.

Bei solchen Regelvorrichtungen besteht grundsätzlich das Problem, auch bei grossen Toleranzen des Stellgliedes eine hohe Stromgenauigkeit des Steuerstroms zu erreichen. Dabei sollte die Ansteuerung des Stellgliedes mit möglichst niedriger Verlustleistung erfolgen. Um solchen Forderungen nachzukommen, muss bei den bekannten Regelvorrichtungen ein hoher Aufwand mit teueren Bauelementen getrieben werden.

Vorteile der Erfindung

Die erfindungsgemässe Regelvorrichtung mit den kennzeichnenden Merkmalen des Hauptanspruchs hat den Vorteil, die Anforderungen einer hohen Stromgenauigkeit bei grossen Toleranzen des Stellglieds sowie die Ansteuerung bei niedriger Verlustleistung in hohem Masse zu befriedigen und gleichzeitig mit einer geringen Bauelementezahl auszukommen. Dabei ist diese Regelvorrichtung insbesondere durch eine NMOS-Rechnereinheit direkt ansteuerbar. Durch die in den Unteransprüchen aufgeführten Massnahmen sind vorteilhafte Weiterbildungen und Verbesserungen der im Hauptanspruch angegebenen Regelvorrichtung möglich.

Zeichnung

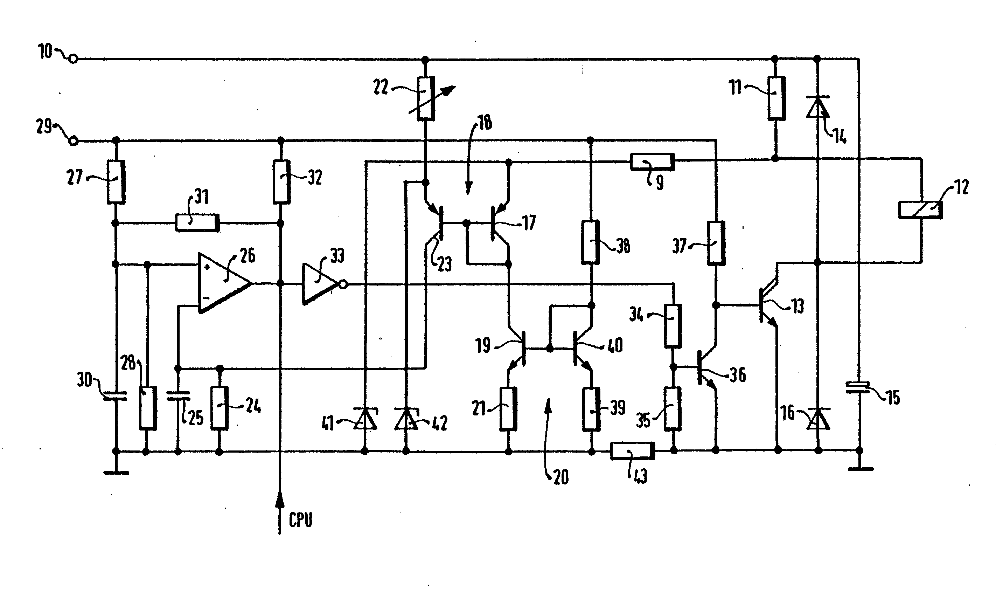

Ein Ausführungsbeispiel der Erfindung ist in der Zeichnung dargestellt und in der nachfolgenden Beschreibung näher erläutert. Die einzige Figur zeigt eine schaltungsmässige Darstellung des Ausführungsbeispiels.

Beschreibung des Ausführungsbeispiels

Eine mit dem positiven Pol einer Versorgungsspannungsquelle verbundene Klemme 10 ist über die Reihenschaltung eines niederohmigen Widerstands 11 (z.B. 0,15 Ohm) mit einem elektrischen Stellglied 12 sowie der Schaltstrecke eines Endstufentransistors 13 mit Masse verbunden. Parallel zum Widerstand 11 und zum Stellglied 12 ist eine Freilaufdiode 14 geschaltet. Zwischen die Klemme 10 und Masse ist ein Glättungskondensator 15 für den Leistungskreis geschaltet. Parallel zur Schaltstrecke des Transistors 13 liegt eine Schutzdiode 16.

Der Verknüpfungspunkt zwischen dem Widerstand 11 und dem Stellglied 12 ist über die Reihenschaltung eines Widerstands 9, des ersten Strompfades 17 einer ersten Stromspiegelschaltung 18, des ersten Strompfads 19 einer zweiten Stromspiegelschaltung 20 sowie eines Widerstands 21 an Masse gelegt. Unter einer Stromspiegelschaltung versteht man üblicherweise die Zusammenschaltung zweier Halbleiterelemente in der Weise, dass ein Strom durch das eine Halbleiterelement einen entsprechenden oder proportionalen Strom durch das andere Halbleiterelement (Strompfad) zur Folge hat. Werden für eine Stromspiegelschaltung zwei Transistoren verwendet, so bilden die beiden Schaltstrecken der Transistoren die beiden Strompfade, die Basis des einen Transistors ist mit der Basis des anderen Transistors verbunden und diese Basisverknüpfung ist an den Kollektor des Transistors angeschlossen, dessen Kollektor-Emitter-Strom dem anderen Transistor aufgeprägt werden soll. Die beiden hier verwendeten Stromspiegelschaltungen 18, 20 sind aus Transistoren aufgebaut, die die Strompfade bilden.

Zwischen der Klemme 10 und Masse liegt eine weitere Reihenschaltung, die aus einem als Sollwertgeber verwendeten einstellbaren Widerstand 22, dem zweiten Strompfad 23, der ersten Stromspiegelschaltung 18 und einem Widerstand 24 besteht. Parallel zum Widerstand 24 ist ein Glättungskondensator 25 geschaltet. Der Verknüpfungspunkt des Widerstands 24 mit dem Strompfad 23 ist an den invertierenden Eingang eines Komparators 26 gelegt. Der nicht invertierende Eingang dieses Komparators 26 ist mit dem Abgriff eines aus zwei Widerständen 27, 28 bestehenden Spannungsteilers verbunden, der zwischen Masse und eine Klemme 29 gelegt ist. Die Klemme 29 ist dabei mit einer stabilisierten Spannungsquelle verbunden. Zum Schutz gegen Störungen der stabilisierten Spannung ist parallel zum Widerstand 28 ein Kondensator 30 geschaltet. Ein zwischen den Ausgang des Komparators 26 und den nicht invertierenden Eingang geschalteter Widerstand 31 dient als Mitkopplungszweig für den Komparator 26. Der Ausgang des Komparators 26 weist einen offenen Kollektor (open collector) auf, weswegen dieser Ausgang über einen Widerstand 32 mit der Klemme 29 verbunden sein muss.

Das Steuersignal einer insbesondere als Mikrorechner (CPU) ausgebildeten Steuerstufe ist dem Ausgang des Komparators 26 zugeführt, der weiterhin über die Reihenschaltung eines Inverters 33 mit einem aus zwei Widerständen 34, 35 bestehenden Spannungsteilers an Masse gelegt ist. Der Abgriff des Spannungsteilers 34, 35 ist an die Basis eines Vorsteuertransistors 36 gelegt, dessen Emitter an Masse und dessen Kollektor an die Basis des Endstufentransistors 13 sowie über einen Widerstand 37 an die Klemme 29 gelegt ist.

Zwischen die Klemme 29 und Masse ist eine weitere Reihenschaltung gelegt, die aus zwei einen Spannungsteiler bildenden Widerständen 38, 39 sowie dem zweiten Strompfad 40 der zweiten Stromspiegelschaltung 20 besteht.

Die beiden von Masse abgewandten Anschlüsse (Emitter) der beiden Strompfade 17, 23 sind über Z-Dioden 41, 42 mit Masse verbunden.

Um den Einfluss des hohen Spannungshubs im Leistungsteil 13 bis 16 sowie 34 bis 37 auf das Steuerteil 17 bis 33 sowie 38 bis 40 zu mindern, ist ein Trennwiderstand 43 zwischen die Masseanschlüsse der beiden Teile geschaltet.

Wenn der Endstufentransistor 13 leitet, so fliesst über den Widerstand 11, das Stellglied 12 sowie die Schaltstrecke dieses Transistors 13 ein Steuerstrom. Durch die Induktivität des Stellglieds 12 steigt der Strom kontinuierlich an. In Abhängigkeit des Spannungsabfalls am Widerstand 11 fliesst ebenfalls ein Strom von diesem Widerstand 11 aus über den Widerstand 9, die beiden Strompfade 17, 19 sowie den Widerstand 21. Dieser Strom ist somit proportional zum Strom durch das Stellglied 12, also zum Strom-Istwert. Durch die Stromspiegelung in der Stromspiegelschaltung 18 fliesst ein entsprechender Strom über die Reihenschaltung der Bauteile 22, 23, 24. Die Spannung am invertierenden Eingang des Komparators 26 ist somit direkt proportional zum Strom der durch den Widerstand 11, bzw. das Stellglied 12 fliesst, d.h. zum Strom-Istwert durch das Stellglied 12. Der nicht invertierende Eingang des Komparators ist mit einer festen Spannung beaufschlagt, die durch den Spannungsteiler 27, 28 vorgegeben wird. Der Widerstand 31 legt im Mitkopplungszweig die Schalthysterese fest. Steigt der Strom durch das Stellglied 12 soweit an, dass die obere Schaltwelle des Komparators 26 erreicht ist, so wird der Endstufentransistor 36 über den Inverter 33 und den Vorstufentransistor 36 abgeschaltet. Der Strom durch das Stellglied nimmt dann kontinuierlich im Freilaufkreis 11, 12, 14 ab. Da in diesem Freilaufkreis der Widerstand 11 liegt, wird diese Stromabnahme über die Stromspiegelschaltung 18 dem invertierenden Eingang des Komparators 26 mitgeteilt. Bei Erreichung der unteren Schaltschwelle schaltet daher der Komparator 26 um und damit den Transistor 13 wieder ein.

Der Stromabgleich, also die Einstellung eines Sollwerts, kann durch Variation des Widerstandes 22 erfolgen.

Eine Regelung erfolgt nur dann, wenn über den CPU-Ausgang dem Ausgang des Komparators 26 ein 1-Signal (5 Volt) zugeführt wird. Durch den offenen Kollektor des Ausgangs des Komparators 26 kann dieses 1-Signal in Abhängigkeit des Schaltzustands des Komparators 26 auf ein 0-Signal gedrückt werden. Wird dagegen von der CPU ein 0-Signal dem Ausgang des Komparators 26 zugeführt, so kann keine Taktung mehr erfolgen und die Regelvorrichtung ist ausser Betrieb gesetzt. Es versteht sich, dass bei inversen Schaltbefehlen der Inverter 33 entfallen kann. Ebenfalls kann prinzipiell eine Invertierung des Schaltsignals dadurch erfolgen, dass bei entsprechend geringem Strom durch das Stellglied 12 der Vorsteuertransistor 36 entfällt. Der Inverter 33 kann natürlich ebenfalls als Vorsteuertransistor bzw. zusätzlicher Vorsteuertransistor ausgebildet sein.

Die zweite Stromspiegelschaltung 20, deren Strompfad 40 mit einem konstanten Strom infolge der stabilisierten Versorgungsspannung von der Klemme 29 beaufschlagt ist, dient zur Erreichung einer höheren Stromgenauigkeit bei Schwankungen der Versorgungsspannung. Über die Stromspiegelung durch die Stromspiegelschaltung 20 werden Stromschwankungen im Stromkreis 17 unterdrückt.

Da z.B. im 12-Volt-Batteriebetrieb oft Störspannungsspitzen bis zu 100 Volt auftreten können, ist ein Schutz für die Stromspiegelschaltung erforderlich. Dieser Schutz ist durch die beiden Z-Dioden 41, 42 gegeben, die Spannungsspitzen z.B. über 35 Volt kurzschliessen. Da der Strom durch den niederohmigen Widerstand 11 sehr hoch sein kann, wäre dazu eine Z-Diode 41 mit hohem zulässigen Strom erforderlich. Da solche Z-Dioden sehr teuer sind, ist der Strombegrenzungswiderstand 9 in diesen Stromkreis geschaltet. Bei der Z-Diode 42 ist dies nicht erforderlich, da eine Strombegrenzung durch den variablen Widerstand 22 erfolgt.

Die aufgezeigte Schaltung wird besonders einfach und billig, wenn für die fünf Transistoren 17, 23, 19, 40, 36 beispielsweise der Transistorschaltkreis CA 3096 Verwendung findet, der fünf Transistoren enthält.

Der Glättungskondensator 15 und die zugehörige Schutzdiode 16 können z.B. bei einer einfacheren Version entfallen. Sie dienen zur Unterdrückung von Spannungsspitzen im Kabelraum.

**Patentansprüche**

1. Regelvorrichtung für ein elektrisches Stellglied (12), das über einen Endstufentransistor (13) mit einem getakteten Steuerstrom mit einstellbarem Tastverhältnis beaufschlagt wird, wobei der Endstufentransistor (13) durch einen Komparator (26) in Form eines bistabilen Schaltgliedes mit Schalthysterese als Sollwert-Istwert-Vergleichsstelle angesteuert wird, dessen erstem Eingang eine feststehende Spannung und dessen zweitem Eingang eine dem Strom durch einen niederohmigen Widerstand (11) in der Stromzuführungsleitung zum Stellglied (12) proportionales Signal zugeführt ist, dadurch gekennzeichnet, dass der niederohmige Widerstand (11) mit dem Emitter des Eingangstransistors (17) einer Stromspiegelschaltung (18) verbunden ist, und dass zum Sollwertabgleich des durch das Stellglied (12) fliessenden Steuerstromes als Teil einer an der Betriebsspannung liegenden Spannungsteilerschaltung (22, 23, 24) ein Sollwertgeber (22) vorgesehen ist, der über den Ausgangstransistor (23) der Stromspiegelschaltung (18) mit dem zweiten Eingang des Komparators (26) verbunden ist.

2. Regelvorrichtung nach Anspruch 1, dadurch gekennzeichnet, dass der Ausgang des Komparators (26) mit offenem Kollektor (open collector) mit dem Steuerausgang einer insbesondere als Mikrorechner (CPU) ausgebildeten Steuerstufe verbunden ist, wobei die beiden alternativen Steuersignale (1- und 0-Signal) dieser Steuerstufe die Ein- und Ausschaltung der Regelvorrichtung steuern.

3. Regelvorrichtung nach Anspruch 2, dadurch gekennzeichnet, dass dem Komparator (26) ein Inverter (33) nachgeschaltet ist.

4. Regelvorrichtung nach einem der vorhergehenden Ansprüche, dadurch gekennzeichnet, dass der von Masse abgewandte Anschluss wenigstens einer der Strompfade (17, 23) der Stromspiegelschaltung (18) über eine Z-Diode (41, 42) an Masse gelegt ist.

5. Regelvorrichtung nach Anspruch 4, dadurch gekennzeichnet, dass dem von Masse abgewandten Anschluss eines Strompfads (17) bei geringem ohmschen Widerstand zur Versorgungsspannungsquelle ein Strombegrenzungswiderstand (9) vorgeschaltet ist.

6. Regelvorrichtung nach einem der vorhergehenden Ansprüche, dadurch gekennzeichnet, dass der erste Strompfad (17) der Stromspiegelschaltung (18) mit einem ersten Strompfad (19) einer zweiten Stromspiegelschaltung (20) verbunden ist, deren zweiter Strompfad (40) mit einem konstanten Strom beaufschlagt ist.

7. Regelvorrichtung nach einem der vorhergehenden Ansprüche, dadurch gekennzeichnet, dass die Masseverbindungen des Leistungsteils (13 bis 16 sowie 34 bis 37) und die Masseverbindungen des Steuerteils (17 bis 33 sowie 38 bis 40) durch einen Widerstand getrennt sind.

## Claims

1. Control device for an electric actuating member (12) to which a pulsed control current with adjustable duty ratio is applied via an output stage transistor (13), the output stage transistor (13) being driven by a comparator (26) in a form of a bistable switching element, the switching hysteresis of which is used as a nominal value/actual value comparison point and the first input of which is supplied with a fixed voltage and the second input of which is supplied with a signal which is proportional to the current by means of a low-resistance resistor (11) in the power supply line to the actuating member (12), characterized in that the low-resistance resistor (11) is connected to the emitter of the input transistor (17) of a current balancing circuit (18), and that, for calibrating the nominal value of the control current flowing through the actuating member (12), a nominal-value transmitter (22), which is connected to the second input of the comparator (26) via the output transistor (23) of the current balancing circuit (18), is provided as part of a voltage divider circuit (22, 23, 24) which is connected to the operating voltage.

2. Control device according to Claim 1, characterized in that the output of the comparator (26) is connected with open collector to the control output of a control stage which, in particular, is constructed as a microcomputer (CPU), the two alternative control signals (1 and 0 signals) of this control stage controlling the switching on and off of the control device.

3. Control device according to Claim 2, characterized in that the comparator (26) is followed by an inverter (33).

4. Control device according to one of the preceding Claims, characterized in that the connection opposite to earth of at least one of the current paths (17, 23) of the current balancing circuit (18) is connected to ground via a Z diode (41, 42).

5. Control device according to Claim 4, characterized in that the connection opposite to earth of a current path (17) is preceded by a current limiting resistor (9), the direct-current resistance being low with respect to the supply voltage source.

6. Control device according to one of the preceding claims, characterized in that the first current path (17) of the current balancing circuit (18) is connected to a first current path (19) of a second current balancing circuit (20), to the second current path (40) of which a constant current is applied.

7. Control device according to one of the preceding claims, characterized in that the ground connections of the power section (13 to 16 and 34 to 37) and the ground connections of the control section (17 to 33 and 38 to 40) are separated by a resistor (43).

## Revendications

1. Dispositif de régulation pour un organe électrique de réglage (12) qui, par l'intermédiaire d'un transistor d'étage final (13), est sollicité par une intensité de commande cadencée à rapport «présence d'impulsion/période totale» réglable, étant précisé que le transistor d'étage final (16) est piloté par un comparateur (26) qui se présente sous forme d'un organe de commutation bistable avec hystérésis de commutation comme position de comparaison valeur prescrite-valeur réelle, à la première entrée duquel on amène une tension fixe et à la seconde entrée duquel on amène un signal proportionnel à l'intensité qui passe dans la résistance de faible valeur ohmique (11) qui se trouve sur le conducteur d'amenée du courant à l'organe de réglage (12), caractérisé en ce que la résistance de faible valeur ohmique (11) est reliée à l'emetteur du transistor d'entrée (17) d'un circuit symétrique (18); et en ce que, pour prescrire la valeur prescrite de l'intensité de commande qui passe dans l'organe de réglage (12), on prévoit, faisant partie d'un circuit diviseur de tension (22, 23, 24) placé aux bornes de la tension d'exploitation, un émetteur de valeur prescrite (22) qui est relié, par l'intermédiaire du transistor de sortie (23) du circuit symétrique (18), à la seconde entrée du comparateur (26).

2. Dispositif de régulation selon la revendication 1, caractérisé en ce que la sortie du comparateur (26) à collecteur ouvert (open collector) est reliée à la sortie de commande d'un étage de commande conçu en particulier sous forme de microcalculateur (unité centale de traitement CPU), étant précisé que les deux signaux de commande alternatifs (signal 1 et signal 0) de cet étage de commande commandent la mise en circuit et hors circuit du dispositif de régulation.

3. Dispositif de régulation selon la revendication 2, caractérisé en ce qu'en aval du comparateur (26) est monté un inverseur (33).

4. Dispositif de régulation selon l'une des revendications précédentes, caractérisé en ce que la borne, côté opposé à la masse, d'au moins l'un des trajets (17, 23) du circuit symétrique (18) est mise à la masse par l'intermédiaire d'une diode Z (41, 42).

5. Dispositif de régulation selon la revendication 4, caractérisé en ce que, dans le cas d'une faible résistance ohmique en direction de la source de tension d'alimentation, une résistance de limitation d'intensité (9) est montée en amont de la borne, côté opposé à la masse, d'un trajet (17).

6. Dispositif de régulation selon l'une des revendications précédentes, caractérisé en ce que le premier trajet (17) du circuit symétrique (18) est relié à un premier trajet (19) d'un second circuit symétrique (20) dans le second trajet (40) duquel passe une intensité constante.

7. Dispositif de régulation selon l'une des revendications précédentes, caractérisé en ce que les liaisons à la masse de la partie puissance (13 à 16 et 34 à 37) et les liaisons à la masse de la partie commande (17 à 33 et 31 à 40) sont séparées par une résistance (43).